Europäisches Patentamt

(19) European Patent Office

Office européen des brevets

(11) Publication number: **0 078 027**
**A2**

(12) # EUROPEAN PATENT APPLICATION

(21) Application number: **82109731.8**

(22) Date of filing: **21.10.82**

(51) Int. Cl.³: **G 01 B 11/00**

(30) Priority: **21.10.81 US 313288**

(43) Date of publication of application:
**04.05.83 Bulletin 83/18**

(84) Designated Contracting States:
**AT BE CH DE FR GB IT LI LU NL SE**

(71) Applicant: **Angell, Bruce R.**
**17216 195th Place N.W.**
**Woodinville Washington 98072(US)**

(72) Inventor: **Angell, Bruce R.**
**17216 195th Place N.W.**
**Woodinville Washington 98072(US)**

(74) Representative: **Frankland, Nigel H. et al,**
**FORRESTER & BOEHMERT Widenmayerstrasse 41**
**D-8000 München 22(DE)**

(54) **A datum point locator.**

(57) A datum point locator tool (12), for use with a machine tool, comprises an assembly (14) to be located in the chuck or collet of a machine tool, said assembly including a protruding electrically conductive tip (16) which is movable from a position in which it rotates eccentrically relative to the axis of the chuck or collet to a position in which it rotates concentrically with the chuck or collet. The datum point locator additionally comprises a light source (30) and means for controllably illuminating the light source in response to the existence of non-existence of contact between said tip and a workpiece, when said tool and said workpiece are mounted on a machine tool. Said light source (30) is mounted on the tool so that light from the light source emanates from the tool at a point spaced from the axis of rotation of the tool.

In locating a datum point when using a machine tool, the datum point locator tool (12) is inserted in the chuck or collet of the tool, with the tip (16) thereof offset so that it rotates eccentrically. The workpiece is advanced towards the tool as it rotates, thus moving the tip (16) until it rotates concentrically, and the light emitted by the light source (30) is observed, a steady state condition indicating that the datum point has been reached.

FIG.1

A Datum Point Locator.

This invention relates to a datum point locator, and more particularly to a datum point locator for use by a machinist to locate a datum point relative to a work piece.

The machining of metalwork by a machinist using his machine tools generally involves cutting, drilling and shaping of a piece of metal stock, so that the stock eventually has the precise measurements of the final product. Finding the exact location of the edges of a workpiece is difficult for any machinist, especially since these edges must be determined often within an .0005 inch (0.0127 mm) accuracy.

Many indicating tools, center finding devices, and edge locating instruments have been developed to help the machinist perform some of these determining tasks with more accuracy. There are static locator devices which incorporate an indicating light (such as those devices of Mann disclosed in USA Patent No. 1,040,715 and of Pierce as disclosed in USA Patent No. 2,109,976) in which contact between a cylindrically shaped conductive locating portion of the locator device and the metal workpiece completes a circuit and illuminates a standard incandescent light bulb. Later Hopkins in USA Patent No. 3,499,226 disclosed an improved static indicator which was lighted via energy of a battery and which was inserted into a chuck or the collet of a jig bore or milling machine.

In 1946, Samuel Simers in USA Patent No. 2,490,483 illustrated and described a dynamic locating device, which is a rotating tool with a flexibly attached tip, which upon contact with a workpiece turned on a standard light bulb receiving energy from a power source not contained within this rotating tool.

Simers' dynamic tool increased the accuracy and improved machining measurements by utilizing the concept of a flexibly mounted contact tip, initially located for eccentric rotation with regard to the axis of the tool. When the tool is rotated and brought towards the workpiece initially the tip only strikes the workpiece intermittently, but gradually the tip is moved to a position in which it rotates concentrically with the tool. There is then continuous contact between the tip and the workpiece.

However, the high degree of precision required for accurate machining could still not be easily and quickly achieved because very accurate visual observation was required to determine at what precise instant a light bulb was continuously on, rather than merely flickering, i.e. at what precise instant continuous contact was made between the tip and the workpiece. This is difficult when an incandescent bulb is used. In Simers' locator tool, there was the very accuarate visual observation to be made when the light bulb light had been extinguished completely, as the continuous contact between tip and workpiece caused an intentional short circuit. Again this is very difficult when an incandescent bulb is used.

These representative prior patents indicate there is still a need for an apparatus that permits a quick and accurate determination of datum points by a machinist.

Thus the prior art discloses a datum point locator tool, for use with a machine tool, said datum point locator comprising an assembly to be located in the chuck or collet of a machine tool, said assembly including a protruding electrically conductive tip, movable from a position in which it rotates eccentrically relative to the axis of the chuck or collet to a position in which it rotates concentrically with the chuck or collet, the datum point locator additionally comprising a light source and means for controllably illuminating the light source in response to the existence or non-existence of contact between said tip and workpiece, when said tool and said workpiece are mounted on a machine tool. Such prior proposed devices have the disadvantage that it is difficult to determine when the light source is in a steady state condition.

The present invention seeks to overcome this problem. In an embodiment of the invention said light source is mounted on the tool and light from the light source emanates from the tool at a point spaced from the axis of rotation of the tool. Thus, when the light source is illuminated continuously a complete ring of light will be visible. Otherwise, only part of a ring of light will be seen.

Preferably said assembly comprises a cylindrical barrel adapted to be located within the chuck or collet of the machine tool, said tip being movably mounted on said barrel, said light source being mounted in said barrel and being adapted to emit light from a predetermined relatively small area on the side wall of the barrel. Thus as the barrel rotates the ring of light will be formed on the side wall of the barrel, and will thus be easily observable.

Advantageously, said light source is a light emitting diode. These devices have a rapid response time, and thus the difficulties caused by the long response times of conventional incandescent lamps are obviated. Conveniently, the tool contains an electric power source for said light source, an appropriate electric circuit being completed when the tip touches a workpiece when the tool and the workpiece are mounted on a machine tool. The tool is thus totally self-contained, and can be used very easily without any additional equipment being needed. In one embodiment the tip has a spring biassed member protruding from the free end thereof. This enables the tool to be used in determining datum points relative to three axes instead of just two axes. In the preferred embodiment the tip is retained on the tool by a resilient spring, a flat collar on the tip engaging a flat collar on the body of the tool so that the collars can slide relative to one another to enable the tip to be moved relative to the body of the tool. Such an arrangement is easy to manufacture, but operates satisfactorily.

This invention also relates to a tool as described above in combination with a machine tool, and to a method of locating a datum point when using a machine tool comprising the steps of locating a work piece on the machine tool, inserting a datum point locator tool as described above in the chuck or collet of the tool, with the tip thereof offset so that it rotates eccentrically, advancing the workpiece towards the tool as it rotates, thus moving the tip until it rotates concentrically, and observing the light emitted by the light source, a steady state condition indicating that the datum point has been reached.

The preferred embodiment of the invention comprises a comparatively low cost dynamic, reliable, impact resistant, compact, internally battery powered light emitting diode locator tool having a presettable eccentrically located spring held workpiece contacting tip which reactively returns, via realignment of its spring, to its concentric location during its rotative contacts with the workpiece while being rotated in the rotating collet of a machine tool. The intermittent contacts of the tip cause the appearance of intermittent light in proportion to the length of the contacts, and the continuous contact causes the appearance to a machinist of a continuous light indicating to him the location of the edge of the workpiece relative to the outside diameter of the rotating tip of his dynamic locator tool.

This machinists' dynamic locator tool, for example used in a milling machine will help the machinists in moving the workpiece quickly and accurately and locating the edge of the workpiece clamped on the machine bed in respect to x and y axes. A second embodiment of this tool includes a lower contact ball spring biased for contacting the surface of the workpiece in determining its position along the z axis. Such locations help in determining other datum points on the workpiece, and in reference to the diameters and lengths of various cutting tools in determining tool width and length offsets with respect to the workpiece. Such determinations are made when a milling machine is preferably being rotated at one thousand revolutions per minute.

At one thousand revolutions per minute, the battery energy supplied light emitting diode is very responsive in creating its spot of light. At such speeds as the contacts increase in duration as the locator tip gradually is reactively moved from its eccentric to concentric position, the rotating spot of light soon appears to the machinist's eye as a constant circle of light. The overall circuit which is in contact with the workpiece completed through the milling machine itself is not otherwise completed.

In order that the invention may be more readily understood, and so that further features thereof may be appreciated, the invention will now be described by way of
example with reference to the accompanying drawings,
in which:

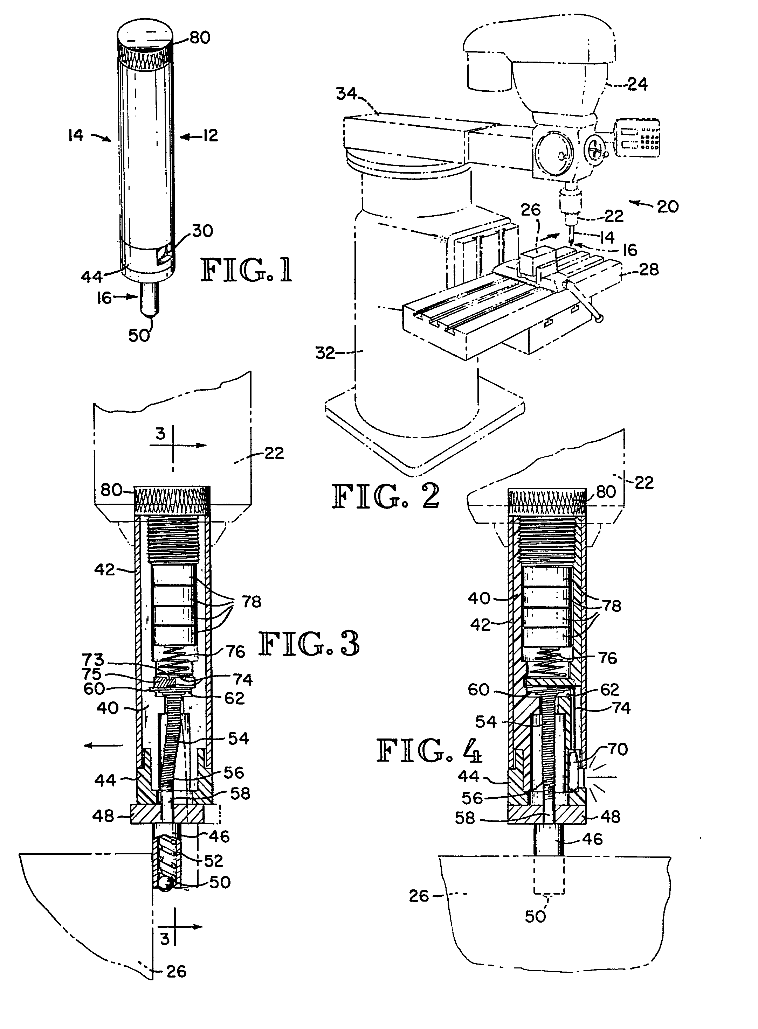

Figure 1 is a perspective elevational view of a machinist's
electro-mechanical dynamic datum point locator tool in
accordance with the invention illustrating the conductive
outer tool barrel, to be fitted in the collet of a machine
tool, the conductive cap and the conductive workpiece contacting flexibly held tip assembly and the single point
light source positioned in an insulated housing;

Figure 2 is a perspective view illustrating a typical use
for the locator tool installed in an adjustable chuck of
a milling machine (dotted lines being used to illustrate
the milling machine), wherein the mill head spins the
locator tool with its tip initially preplaced to be rotated eccentrically, while the workpiece which is mounted
on the milling machine bed moves towards the centerline
of the mill head of the milling machine, initially engaging the tip intermittently and moving the tip relative
to the tool until the tip shaft is concentrically rotating,
these operational stages being indicated by a light emitting diode which initially creates an intermittent light
which later appears as a continuous ring of light;

Figure 3 is a cut away side view of the locator tool
shown in figures 1 and 2 illustrating the mechanical and
electrical components positioned within the body or barrel
of the locator tool, and also indicating how the conductive workpiece contacting tip assembly is flexibly mounted
via a spring for movement to an initial eccentric position
prior to its first engagements against the edge of a workpiece when rotating in the collet of a machine tool;

Figure 4 is a cut away side view of the locator tool shown in figures 1, 2 and 3, taken on line 3-3 of figure 3 showing in addition to the previously illustrated mechanical and electrical components, the resistor, wires, and the light emitting diode light source which illuminates upon contact of the tip with the workpiece;

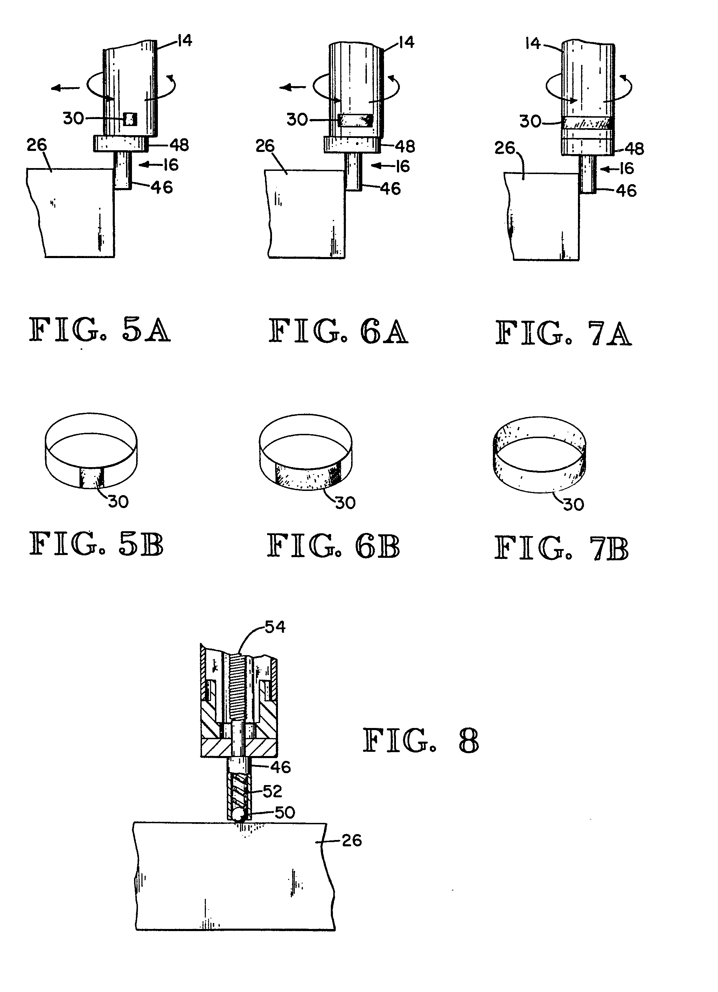

Figures 5A, 6A, 7A, schematically illustrate the method of precisely locating the edge of a workpiece when using the locator tool shown in figures 1 to 4, wherein the tip of the locator tool commences in an eccentric position, and upon each subsequent revolution, as the workpiece is moved, is reactively moved relative to the axis of rotation of the tool until final continuous contact between the tip shaft and the workpiece is made, with the tip shaft then being in a concentric position relative to the locator tool body or barrel as shown in figures 5A, 6A and 7A and corresponding figures 5B, 6B, and 7B show the corresponding duration of light emission, which corresponds with the duration of electrical contact between the tip shaft and the workpiece, and which appears first as a very small partial arc of light around the locator tool body, then a larger arc and eventually appears as a full circle of light around a locator tool body during the continuing rotating of the tool holding chuck of the machine tool;

Figure 8 is a partial view broken away to illustrate another use of the locator tool, wherein a metal ball flexibly mounted under the bias of a spring in a hollow end of the tip assembly, with a peened end of the tip keeping the ball in the tip, contacts a surface during movement of the locator tool along the z axis;

Figure 9 is a perspective exploded view of the various components of the locator tools, shown in figures 1 to 8, illustrating more clearly, for example, both halves of
the interior insulated housing body, the tip assembly,
the mechanical components and the electrical components.

Figure 10 is a schematic view showing how the electrical
circuit is completed from the tip of the locator tool
through the workpiece, through the milling machine, and
through the components of the locator tool to energize
the light emitting diode; and

Figure 11 is a partial schematic perspective view showing the locator tool's tip assembly adjacent a workpiece
to illustrate the relative positioning of the x, y and z
axes with respect to both of them

A machinist's electro-mechanical dynamic datum point
locator tool 12 in accordance with the invention is adapted to provide light signals which begin as intermittent
signals and which finally become light signals, while the
tip assembly of the tool moves from an initial position,
in which it rotates eccentrically and only contacts
the workpiece intermittently, to a terminal position, in
which the tip assembly rotates concentrically and contacts
the workpiece continuously.

The locator tool 12 when viewed as assembled includes an
outer tool barrel assembly 14 (which may be considered to
be  a small cylinder or tool barrel), conductive threaded
metal cap 80, a conductive, flexibly supported, tip
assembly 16, an insulated non-conductive collar 44,
and a single point light source 30. As shown in figure 2
the locator tool 12 is intended to be used with a machine
tool such as a milling machine 20, to determine datum points
with respect to three axes x, y and z, on a workpiece 26
of metal stock. In use the locator tool 12 is placed
in an adjustable chuck 22 or collet in a mill head 24
of the milling machine 20. The tip assembly is located in a position in which the tip will rotate eccentrically on rotation of the tool about the axis of the barrel assembly 14. A workpiece 26 of metal stock is then clamped to a milling machine bed 20 or a vice thereon, which is moved toward the locator tool. The milling machine 20 is then set to operate at 1000 rpm and actuated. The workpiece 26 is moved towards the axis of rotation of the tool by moving the machine bed 28, so the tip assembly 16, eccentrically positioned, makes intermittent contacts with the edge of a workpiece 26. This results in the tip assembly 16 moving towards the axis of rotation of the tool barrel assembly 14. Continued movement of the machine bed 28 brings the tip assembly 16 into alignment with the axis of rotation of the tool barrel assembly 14, and there is then continuous contact between the tip 16 and the workpiece.

This eccentric to concentric movement of the tip assembly 16 of the locator tool 12, and what occurs as a consequence of this movement, is further illustrated in the figures 3 and 4 showing the mechanical and electrical components positioned within the interior of the locator tool 12. The conductive tip assembly 16 is flexibly and pivotally secured to a hollow insulating body 40 within the tool barrel assembly 14, by a tension spring 54 which is electrically conductive and allows the tip assembly 16 to be moved from an eccentric to a concentric position with reference to the center of the locator tool 12. As the conductive tip shaft 46 (which may be considered to be a central cylinder or cylindrical tip) of this tip assembly 16 makes initial intermittent rotational contact with the workpiece 26, the single point light source 30 is intermittently illuminated. This eccentric to concentric movement and the resultant changing observable light pattern, is further shown in figures 5A to 7A and 5B to 7B.

The tip assembly 16 is first moved to an off concentric position, i.e. eccentric position, relative to the centerline of tool barrel assembly 14, i.e. the centre of the locator tool. The edge of the workpiece 26 approaches the locator tool 12 as it rotates in the mill head 24. In its eccentric position, the conductive tip shaft 46 makes only intermittent rotational contact with the edge of the workpiece 26 as illustrated in Figure 5A. The light source 30 , which is a single point light source, shines through an aperture in the insulated collar 44, while the locator tool 12 is spinning, and creates the observable image to a machinist of a square of light as shown in Figure 5B during this initial stage. As the workpiece 26 is moved farther in the direction of the locator tool 12, contact is made over a greater proportion of the circumference of the rotating tip shaft 46 with the edge of the workpiece 26 during each rotation when in the condition illustrated in Figure 6A. Accordingly, the single point light source 30 is illuminated for a longer period of time which results in the observed appearance by the machinist of an arc of light as illustrated in Figure 6B. Finally, when centerlines of the mill head and the locator tool 12 are almost directly in line with the edge of the workpiece 26 (except for one half the diameter of the tip shaft 46), the tip shaft 46 is then concentric with the axis of the tool and is making continuous contact with the edge of the workpiece 26. This is the condition shown in Figure 7A. At this operation stage, the arc of light appears to the machinist as a complete circle of 360 degrees as though it was wrapping entirely around the rotating locator tool 12, as illustrated in Figure 7B.

The procedure helps to establish an initial datum point, for example in reference to the x axis. The final establishment of this datum point is achieved by stopping the milling machine 20 and removing the locator tool 12 from the adjustable chuck 22. The milling machine bed 28, with the clamped workpiece 26, is then moved by a distance equal to half the diameter of the tip shaft 46 closer to the centreline of the millhead 24. At this point the centreline of the mill head 24 is located directly above the edge or datum point desired on the workpiece 26. A similar procedure is followed to determine a datum point in reference to the y axis. Any coordinate may then be located on the surface of the workpiece 26 with respect to the x and y axes.

As shown by figure 8, the tip assembly 16 includes a spring biased metal ball 50 fitted into a hollow end 51 of the tip shaft 53 and held therein by crimping or peening of the mouth of the hollow end 51. In a manner similar to finding the "x" and "y" axis edges of a workpiece 26, the top surface in reference to the "z" axis may be located by moving the rotating locator tool 12 in proximity to the surface below until rotational contact is made between the ball 50 and the workpiece 26, thereby illuminating the single point light source 30, creating the observable image of an arc of light on the circumference of the tool body 14. The provision of the ball 50 is optional, and embodiments not having the ball may still be of great value in locating datum points relative to the x and y axes.

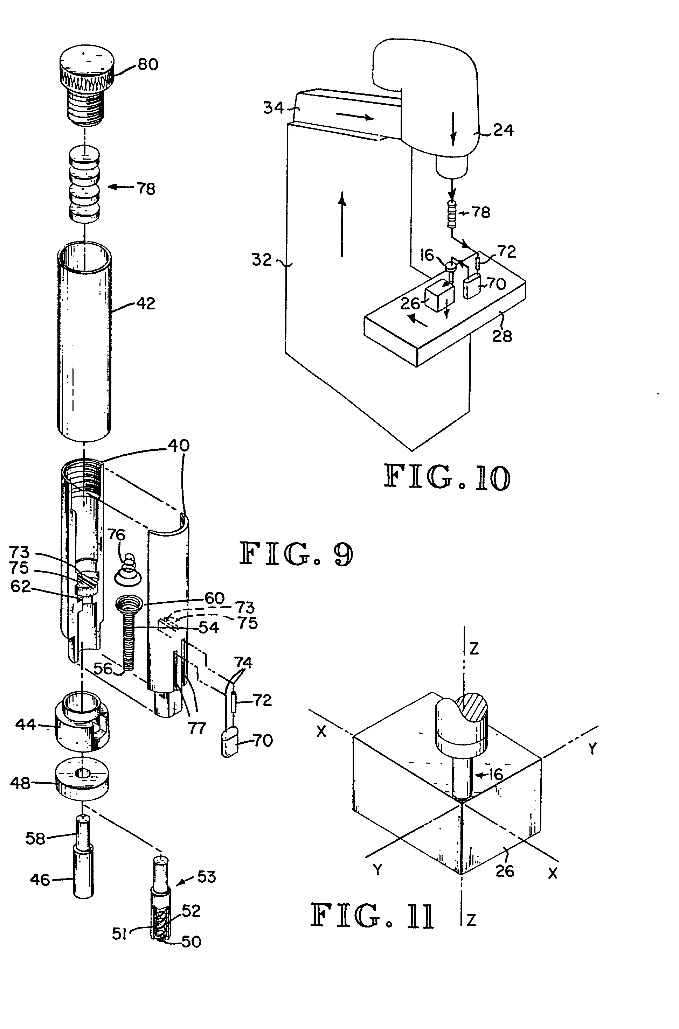

Two embodiments of the rotating locator tool 12 are shown in the exploded view of figure 9, and thus this figure illustrates one tip with a ball, and one tip without a ball. Within the tool barrel assembly 14 is a hollow insulating body 40, formed in two halves, of moulded plastic, and fitted together for slidable insertion through a conductive tubular sleeve 42 of the tool barrel 14. Thereafter the insulating or nonconductive collar 44 and conductive tip assembly 16 are also inserted. The hollow insulating body 40 contains various moulded cavities to secure and house the other mechanical and electrical internal components of the locator tool 12, as well as to insulate them from the conductive tubular sleeve 42.

The conductive tip assembly 16 in the embodiment without a ball comprises a conductive tip shaft 46, which is firmly secured to a conductive collar 48 as a subassembly 16. The collar 48 is resiliently biased into relatively firm contact with the end of the insulating collar 44 by the spring 54, but the collar 48 can slide relative to the collar 44, thus enabling the tip assembly to be moved from the initial eccentric position to the final concentric position. The modified tip shaft 53 in a second embodiment contains a metal ball 50 spring biased and captively mounted within a hollow end 51, of the modified tip shaft 53, and kept in a downward protruding position by metal spring 52 as shown in figure 9. These embodiments of the tip assembly 16 are respectively secured within the insulating body 40 by their attachment to a tension spring 54, at its tension end 56 to the spring adaptive portion 58 of the tip shaft 46 in the first embodiment and the modified tip shaft in the second embodiment, and the tension spring 54 is in turn secured to the insulating body 40 at its enlarged top 60 which is compressed into a moulded spring cavity 62 of the hollow insulating body 40. This tension spring 54 is conductive and allows the tip assembly 16 to be pivotally and flexibly manoeuvered from its eccentric to concentric operating positions. An insulating collar 44, i.e. nonconductive collar 44, is positioned between the conductive collar 48 of the tip assembly 16 and both the conductive tubular sleeve 42 and the insulating body 40, with its exterior being flush with the exterior of the locator tool barrel assembly 14. The insulation collar 44 contains a cut away portion, through which the single point light source may be observed.

The electronic and electrical components comprise: the single point light source 30 which is a low power consumptive, short response time, light emitting diode often referred to as an LED 70, which is seated or positioned in the cut away portion of the insulating collar 44 and partially overlapped about its top edge by the tubular sleeve 42; a current limiting resistor 72 to prolong the life of the batteries; conductive lead wires 74 to and from the LED 70 which are positioned in slots 77 and 73 respectively of the hollow insulating body 40 and an insulating abutment disc 75 which is integrally moulded with the insulating body 40 as two matching halves which when fitted together with the insulating body 40 halves, form disc-like abutments. So one conductive lead wire 74 above the insulating abutment 75 contacts the compression spring 76 and one conductive lead wire 74 below contacts the tension spring 54; four batteries 78 for insertion into the insulated body 40 in another cavity with the conductive compression spring 76, to provide approximately six volts of electricity; and a metal cap 80 threaded into the top end of the hollow insulating body 40 making electrical contact with the batteries 78 and also the outer tubular conductive sleeve 42 positioning the batteries against the compression spring 76.

As shown by figures 3, 4 and 9, the internal electro-mechanical components of the locator tool 12 are arranged in series, with the electrical circuit current flowing through the cap 80, batteries 78, compression spring 76, one lead wire 74, LED 70, limiting resistor 72, another lead wire 74, tension spring 54 and conductive tip assembly 16. As further shown by figure 10, the overall circuit is completed through the milling machine 20 and its components. During operations when the locator tool 12 is being rotated, as the tip assembly 16 strikes the workpiece 26, the overall circuit is completed from the tip assembly 16, through the workpiece 26, the milling machine bed 28, mill pedestal 32, running gear 34 of the milling machine, milling head 24, chuck or collet 22, the conductive sleeve 42 of the locator tool 12 and on through its components: metal cap 80, batteries 78, compression spring 76, one lead wire 74, LED 70, limiting resistor 72, another lead wire 74, tension spring 54 and back to the tip assembly 16.

Figure 11 schematically illustrates the positioning of the x, y and z axes with respect to a workpiece 26 and the tip assembly 16, to assist in one's understanding of how effectively the machinist uses this locator tool 12 in determining datum points on the workpiece in respect to these axes.

Thus, in summary, the above description relates to a machinist's electro-mechanical dynamic datum point locator tool, providing intermittent to continuously appearing light signals at the circumference of the locator tool, during the tool's spring held tip's eccentric to concentric rotational workpiece contacts while rotating in the collet of a mill head of a machine tool, said tool comprising: a small cylinder or tool barrel for placement, for example, in an adjustable chuck or collet in a mill head of a milling machine; a tip assembly flexibly supported and depending from the small cylinder for eccentric pre-placement rotation, continuing less eccentric rotation, and final concentric rotation immediately adjacent an edge of a workpiece held in place on the bed of the milling machine; a light emitting diode supported in the small cylinder at its circumference to emit light from a small area of the small cylinder, whenever the initially eccentrically placed tip assembly touches an edge of a workpiece, and as the edge of the workpiece is moved closer to being in line with the centreline of the millhead of the milling machine and the tip assembly is reactively moved progressively toward its concentric rotating position then this light emitting diode stays no longer during this movement of this tip assembly, until its spot source of light at its circumference is continuously turned on and by virtue of its speed of rotation the light appears to an observing machinist as a continuous ring of light or halo of light indicating to him that the centre line of the chuck or collet and the mill head of the milling machine is only away from the edge of the workpiece by a distance equal to one half of the diameter of the cylindrical tip of the tip assembly of this locator tool; and electro-mechanical means to complete a potential circuit through the locator tool from its small cylinder, through the light emitting diode, and on to the cylindrical tip, which circuit is ultimately completed through the workpiece and the milling machine. Preferably the small cylinder is a subassembly comprising, in turn: a conductive tubular sleeve; a hollow insulating body closely fitted within the tubular sleeve and made in two longitudinal halves which when assembled define several chambers and a disc like abutment to receive the electro-mechanical means; a conductive externally threaded metal cap threaded down into the top of this interior insulating sleeve; and a nonconductive bottom collar having a circumferential space to receive the light emitting diode, a lower central opening to receive the depending tip assembly, and a formed top for placement into both the lower end of the conductive tubular sleeve and the hollow insulating body, following the earlier insertion of the insulating body together with the electro-mechanical means into the conductive tubular sleeve. The electro-mechanical means installed within the chamber of the assembled halves of the hollow insulating body, as arranged from top to bottom, comprises in turn : a battery means in contact with the above conductive threaded cap; a compression spring in contact with the above battery means; a conductive lead wire in contact with the above compression spring and extending downwardly to the circumferentially positioned light emitting diode; an insulating abutment, integrally formed within the hollow insulating body to receive the top end of this upper conductive wire and also the bottom of this compression spring; another conductive lead wire located adjacent the bottom of this insulating abutment integrally formed within the hollow insulating body and extending downwardly through the limiting resistor to the light emitting diode; a depending tension spring abutting at its top both the other conductive wire and the bottom of the insulating abutment and extending downwardly within the hollow insulating body with clearance all around this spring permitting its sidewise flexure and being seized at its lower end to frictionally fit over the tip assembly tip, which is initially preset in an eccentric position before the locator tool is installed and rotated to determine a machinist's datum point in reference to an x or y axis. The tip assembly flexibly supported and depending from the small cylinder, comprises, in turn, a tip subassembly of a central cylinder or tip shaft, larger in diameter at the bottom for contacting the workpiece, a smaller adaptive portion at the top for insertion within the end of the depending tension spring, and firmly receiving a conducting collar around the adaptive portion adjacent to its larger diameter portion with the exterior diameter of this conducting collar matching the like exterior diameters of both the bottom non conducting collar and the outer conductive tubular sleeve, so when they are all aligned, they appear as the continuation of the outer overall surface of the small cylinder of this machinist's locator tool. The central cylinder of the tip subassembly has a larger diameter bottom formed with a hollow interior, and a spring is inserted, then a metal ball is inserted, thereafter the entry of the hollow interior is slightly peened over to retain the metal ball as it protrudes below the larger diameter bottom to first touch a
surface of a workpiece as a machine tool head is lowered
and thereafter to commence the completion of a circuit,
causing in turn the circumferentially located light emitting diode to function to create the appearance of a halo
of light to indicate to a machinist the location of this
surface of the workpiece in reference to the z axis.

Considered from another aspect the above described machinist's electro-mechanical dynamic datum point locator
tool, for providing intermittent to continuously appearing
circumferential located light signals while rotating in
a collet or chuck in the mill head of a machine tool,
during the tool's spring held tip assembly's eccentric
to concentric rotational workpiece contacts, comprises:
a tool barrel assembly for insertion in a collet or
chuck of a machine tool and to depend therefrom having
a conducting exterior across its top and down its sides,
and a multi chambered insulated interior to hold electro-
mechanical means; a workpiece contacting tip assembly
flexibly mounted on the tool barrel assembly and depending
therefrom for initial preset eccentric positioning and for
reactive movements upon contacting a workpiece to return
to a concentric position on the centrelines of both the
locator tool and of the mill head of a machine tool; a
light emitting diode installed in the tool barrel assembly, at its circumference, for providing a source of light
when during rotation of the locator tool in a machine tool,
the workpiece contacting tip assembly preset eccentrically
touches the workpiece to complete a circuit throughout the
locator tool and the machine tool, the observed light
thereafter eventually appearing as a halo of light, when
the contacting tip assembly again becomes concentric to
the tool barrel assembly and electro-mechanical means positioned within the tool barrel assembly to complete the
overall circuit through the locator tool and to be flexibly connected to the work contacting tip assembly.

The above description also relates to a combination of a machine tool with an adjustable chuck or collet and a workpiece, and a machinist's electro-mechanical dynamic datum point locator tool, providing intermittent to continuously appearing light signals at the circumference of the locator tool, during the tool's spring held tip assembly's eccentric to concentric rotational workpiece contacts while rotating in the adjustable chuck or collet of a machine tool.

Claims:

1.    A datum point locator tool, for use with a machine tool, said datum point locator comprising an assembly to be located in the chuck or collet of a machine tool, said assembly including a protruding electrically conductive tip, movable from a position in which it rotates eccentrically relative to the axis of the chuck or collet to a position in which it rotates concentrically with the chuck or collet, the datum point locator additionally comprising a light source and means for controllably illuminating the light source in response to the existence or non-existence of contact between said tip and workpiece, when said tool and said workpiece are mounted on a machine tool wherein said light source is mounted on the tool and light from the light source emanates from the tool at a point spaced from the axis of rotation of the tool.

2.    A tool according to claim 1 wherein said assembly comprises a cylindrical barrel adapted to be located within the chuck or collet of the machine tool, said tip being movably mounted on said barrel, said light source being mounted in said barrel and being adapted to emit light from a predetermined relatively small area on the sidewall of the barrel.

3.    A tool according to claim 1 or claim 2 wherein said light source is a light emitting diode.

4.    A tool according to any one of the preceding claims, wherein the tool contains an electric power source for said light source, an appropriate electric circuit being completed when the tip touches a workpiece when the tool and the workpiece are mounted on a machine tool.

5.    A tool according to any one of the preceding claims, wherein the tip has a spring biased member protruding from the free end thereof.

6.    A tool according to any one of the preceding claims wherein the tip is retained on the tool by a resilient spring, a flat collar on the tip engaging a flat collar on the body of the tool so that the collars can slide relative to one another to enable the tip to be moved relative to the body of the tool.

7.    A tool according to any one of the preceding claims wherein the tool comprises a cylindrical barrel having an outer conducting sleeve, which contains an insulating body, closely fitted within the sleeve, and made in two longitudinal halves, which when assembled define chambers to receive batteries and other devices, the sleeve being closed at the upper end by a cap, and at the lowe end by a collar that contains the light source, and defines an aperture in the side wall of the barrel through which light from the light source may shine.

8.    A tool according to any one of the preceding claims in combination with a machine tool.

9.    A method of locating a datum point when using a machine tool comprising the steps of locating a workpiece on the machine tool, inserting a datum point locator tool according to any one of claims 1 to 7 in the chuck or collet of the tool, with the tip thereof offset so that it rotates eccentrically, advancing the workpiece towards the tool as it rotates, thus moving the tip until it rotates concentrically, and observing the light emitted by the light source, a steady state condition indicating that the datum point has been reached.

FIG. 1

FIG. 2

FIG. 3

FIG. 4

FIG. 5A

FIG. 6A

FIG. 7A

FIG. 5B

FIG. 6B

FIG. 7B

FIG. 8

80

78

42

40

76

73
75
62

60 73
75
54
56

44

77

74

72

70

48

58

46

53

52

51
50

FIG. 9

34

24

32

78

16
72

70

26

28

FIG. 10

Z

X

Y

16

Y

X

26

Z

FIG. 11